# EUROPEAN PATENT APPLICATION

(11) **EP 4 299 211 A1**
(43) Date of publication of application: **03.01.2024**
(21) Application number: 21927629.2
(22) Date of filing: 18.11.2021
(51) Int. Cl.: B22F 3/105, B22F 7/08, B22F 10/60, B23P 6/00, B33Y 40/00

(54) **METHOD FOR REPAIRING ULTRA-THIN STRUCTURE BY MEANS OF ADDITIVE MANUFACTURING**

(30) Priority: 26.02.2021 CN 202110213744
(71) Applicant: AECC Shanghai Commercial Aircraft Engine Manufacturing Co., Ltd., Shanghai 201306 (CN); Aecc Commercial Aircraft Engine Co., Ltd., Shanghai 200241 (CN)
(72) Inventor: JIAO, Zongge, Shanghai 200241 (CN); FU, Jun, Shanghai 200241 (CN); FU, Xin, Shanghai 200241 (CN); LEI, Liming, Shanghai 200241 (CN); YAN, Xue, Shanghai 200241 (CN)
(74) Representative: Concone, Emanuele
(86) International application number: PCT/CN2021/131426
(87) International publication number: WO 2022/179205

(57) **Abstract**

The present invention relates to a method for repairing an ultra-thin structure by means of additive manufacturing. The method comprises the following steps: removing a damaged region of an ultra-thin structure by means of machining; acquiring a three-dimensional model of a region to be repaired of the ultra-thin structure; processing the three-dimensional model of the region to be repaired; constructing a powder carrying device on the periphery of the bottom of the region to be repaired, and allowing powder in the powder carrying device to be filled until flush with or tangent to the surface of the bottom of the region to be repaired; melting, sintering or curing the powder in the powder carrying device around the outer contour of the ultra-thin structure by means of a high-energy beam or an auxiliary heating device, and combining the powder with the outer contour of the ultra-thin structure to form an outer contour thickened structure so as to form a flexible fixture; and repairing the region to be repaired by means of additive manufacturing technology according to a planned path obtained from the model processing. The present invention has the following beneficial technical effect: an ultra-thin structure can be repaired without requiring an extra-small-spot high-energy beam apparatus or a thickened fixture.

## Description

### Technical field

The invention relates to the field of additive manufacturing, in particular to a method for repairing an ultra-thin structure by additive manufacturing.

### Background

Ultra-thin structure is widely used in the field of aeroengine blade, with the further development of manufacturing technology in recent years, the integration of engine blisk and blades has become the mainstream trend of development. Different from the conventional separated blisk, if the integrated blisk is damaged, the damaged part cannot be replaced, while the entire blisk need to be replaced, which will increase the usage cost of the engine greatly. It is of great importance to reduce the usage cost of the engine by repairing the integrated blisk that is damaged during the machining process or service process using the relevant repairing technique, which can repair its service performance and avoid the scrapping of the integrated blisk. Conventional repairing methods such as arc welding have a series of problems such as high heat input, large residual stress, and severe deformation. Therefore, there is a need in the development of advanced repairing technique with a low coat and short procedure for the high value-added components such as integrated blisk and turbine blade.

Laser Melting Deposition (LMD) technique is a common additive manufacturing technique, where the synchronously conveyed powder is melted with part of the base plate by high energy laser beam to form a moving unsteady molten pool, the molten pool is solidified rapidly at extremely high temperature gradient, and deposited point by point, scanned line by line, stacked layer by layer to finally form the solid part. At the meantime, compared with conventional repairing techniques such as arc welding, the high energy laser beam in this technique has an intense energy density, which has a relatively small influence on the base plate during the forming process and the forming path has a high adaptability, so it is especially suitable for rapid repairing of high value-added components, such as the mounting joint system, rear joint system, integrated blisk, turbine blade or other parts in the aeroengine.

Repairing the part with ultra-thin structure such as the tip, leading edge and trailing edge of the blade is a difficult issue in additive manufacturing repairing technique. As the thickness of the ultra-thin structure of the part is generally less than 1mm, it is very likely to cause laser light leakage when repairing with a repairing equipment that has a relatively low forming precision, for example the laser spot diameter is larger than 1mm, resulting in damage on the surface of the structure. At the meantime, due to the low thickness, low heat transfer rate in the air, heat would be accumulated severely, which is likely to cause collapse, ablation, deformation or other situations due to overheating in that area.

Currently, the repairing of ultra-thin structure by high energy beam mainly adopts the following two solutions: (1) high energy beam equipment with ultra-small spot and high forming accuracy, (2) thickened fixture, such as customized profile modeling thickened fixture. In the first solution, special repairing head is required, the equipment requirement is high, while the conventional equipment can hardly meet the requirement, and the repairing rate will be low if a small spot is used throughout the process of repairing. In the second solution, the profile modeling fixture requires a long processing time, and as the fixture and the specimen are partially metallurgically bonded, the vibration of cutter is likely to occur during the removing process by machining after repairing, thereby resulting in machining error or even directly resulting in deformation of the ultra-thin structure, which makes the precision of dimension after repairing difficult to meet the design requirements.

### Summary of the invention

One objective of the invention is to provide a method for repairing an ultra-thin structure by additive manufacturing, which can solve the problems in the prior art, the ultra-thin structure can be repaired without a super mini spot high energy beam or a thickened fixture.

The above objective of the invention can be achieved by a method for repairing an ultra-thin structure by additive manufacturing, the ultra-thin structure refers to the structure with a thickness of less than 1mm, wherein the method comprises the following steps:
(a) removing a damaged area of the ultra-thin structure by machining;
(b) obtaining a three-dimensional model of an area to be repaired of the ultra-thin structure;
(c) performing three-dimensional model processing on the area to be repaired;
(d) building a powder carrying device around a bottom of the area to be repaired, so that powder is filled into the powder carrying device until it is on the same plane as or tangent to a bottom surface of the area to be repaired;
(e) melting, sintering or solidifying the powder in the powder carrying device around an outer contour of the ultra-thin structure by a high energy beam or auxiliary heating, and combining with the outer contour of the ultra-thin structure to form a thickened outer contour structure, which becomes a flexible fixture and plays a role in supporting subsequent repairing and preventing ablation;
(f) based on path planning obtained by the model processing, repairing the area to be repaired 12 by additive manufacturing technique.

According to the above technical solution, the method for repairing the ultra-thin structure by additive manufacturing of the invention has the following benefit: the ultra-thin structure can be repaired without a super mini spot high energy beam or a thickened fixture.

Specifically, the invention provides the method for repairing the ultra-thin structure by additive manufacturing, which has a simple and convenient repairing process, high operability and is suitable for the ultra-thin structure that is difficult to repair, the repairing can be achieved by a short procedure. Taking blade repairing as an example, it is estimated that the repairing time is reduced from the original 75hrs (fixture designing 20hrs+, fixture processing 30hrs+, fixture fixing 1hr+ and fixture removing 24hrs) to 12hrs, which can save the materials greatly and achieve rapid repairing at a low cost.

Preferably, the method further comprises step (g): after step (f), performing heat treatment on the ultra-thin structure after repairing to remove stress or adjust the microstructure.

According to the above technical solution, the method for repairing the ultra-thin structure by additive manufacturing of the invention has the following benefit: the stress in the ultra-thin structure after repairing can be removed or the microstructure can be adjusted effectively.

Preferably, the method further comprises step (h): after step (g), performing machining on the repaired area, so that the dimension of the repaired area satisfies the final operating requirement.

According to the above technical solution, the method for repairing the ultra-thin structure by additive manufacturing of the invention has the following benefit: the dimension of the repaired area can satisfy the final operating requirement.

Preferably, a high energy beam equipment is used in step (e), and the same or a different high energy beam equipment is used in step (f).

According to the above technical solution, the method for repairing the ultra-thin structure by additive manufacturing of the invention has the following benefit: the flexible fixture design and additive manufacturing technique are combined, without the need of modifying the equipment or purchasing new equipment, so the cost of the equipment can be reduced greatly and the range of application of the equipment can be expended effectively.

Preferably, the three-dimensional model in step (b) is obtained by building a model in a modelling software or three-dimensional scanning on an original part.

According to the above technical solution, the method for repairing the ultra-thin structure by additive manufacturing of the invention has the following benefit: the three-dimensional model of the area to be repaired can be obtained preferably.

Preferably, step (c) comprises: allowance addition processing, layer separation and cutting processing and path planning processing.

According to the above technical solution, the method for repairing the ultra-thin structure by additive manufacturing of the invention has the following benefit: the three-dimensional model of the area to be repaired can be processed preferably for the convenience of subsequent repairing operations.

Preferably, the flexible fixture in step (e) is constructed by metallic or non-metallic materials and fixed to the ultra-thin structure.

According to the above technical solution, the method for repairing the ultra-thin structure by additive manufacturing of the invention has the following benefit: the powder carrying device is constructed by an appropriate material at an appropriate position for the convenience of subsequent powder filling, forming the flexible fixture after sintering.

Preferably, laser melting deposition technique with synchronous powder feeding, selective laser melting deposition technique with powder spreading or other high energy beam additive manufacturing technique is used for repairing in step (f).

According to the above technical solution, the method for repairing the ultra-thin structure by additive manufacturing of the invention has the following benefit: the area to be repaired is repaired by an appropriate additive manufacturing technique to ensure a better repairing effect.

### Description of the drawings

Figure 1A is a schematic diagram of the damaged area at the tip of the compressor blade.
Figure 1B is a schematic diagram of the area to be repaired at the tip of the compressor blade.
Figure 2 is a schematic diagram of the flexible fixing for the damage at the tip of the compressor blade according to the first embodiment of the invention.
Figure 3 is a schematic diagram of the flexible fixing for the damage at the leading edge and trailing edge of the compressor blade according to the second embodiment of the invention.

### Reference sign list

11. damaged area
12. area to be
13. surface of bottom
21. powder carrying device
22. high-temperature resistance tape
23. powder

### Embodiments of the invention

Specific embodiments of the present invention will be described below. It should be noted that in the specific description of these embodiments, it is impossible to describe all features of the actual embodiments in detail in this specification for the sake of simplicity and conciseness. It should be understood that in the actual implementation process of any one of the embodiments, just as in the process of any engineering project or design project, in order to achieve the specific goals of the developer and meet the system-related or business-related constraints, various specific decisions are often made, and this will lead to the change from one embodiment to another. In addition, it can also be understood that, although the efforts made during the development process may be complex and redundant, for those of ordinary skill in the art related to the contents disclosed in the present invention, the modifications in design, manufacturing or production based on the technical contents disclosed in the invention are only conventional technical means and the contents of the present disclosure should not be considered to be insufficient.

Unless otherwise defined, the technical terms or scientific terms used in the claims and the description shall have the general meaning understood by those skilled in the art to which the present invention belongs. The term 'first', 'second' or other similar term used in the description and the claims of the patent application for invention do not indicate any order, quantity or importance, but are only used to identify different components. The term 'one', 'a' or other similar term do not indicate a limit in quantity, but indicate the existence of at least one. The term `comprise', `include' or other similar term means that the component or part stated before `comprise' or 'include' comprises the component or part or their equivalents listed after `comprise' or 'include', and do not exclude other components or parts. The term 'connect', 'contact' or other similar term is not limited to physical or mechanical connection, nor limited to direct or indirect connection.

It should be noted that in this disclosure, the term `ultra-thin structure' refers to the structure with a thickness of less than 1mm. The term 'repair' refers to the technical repairing of a damaged part. The term `laser melting deposition' refers to the use of laser to melt the materials and produce a solid part by the method of building up layer by layer. The term `additive manufacturing' refers to the use of a high-energy beam to melt the materials and produce a solid part by building up layer by layer. The term `flexible' refers to adapting to the shape of the area to be repaired. The term 'fixture' refers to the tool or fixture used during the repairing process.

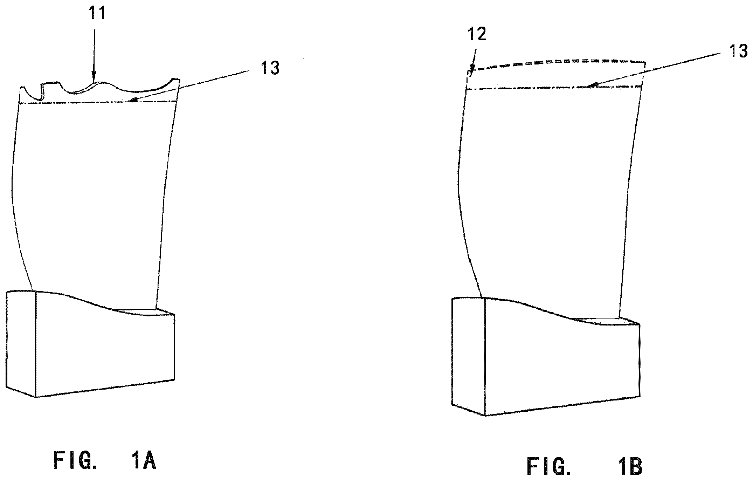

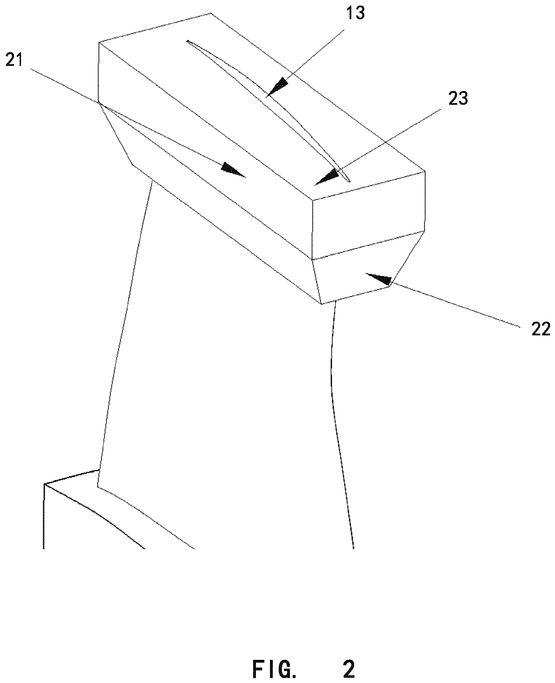

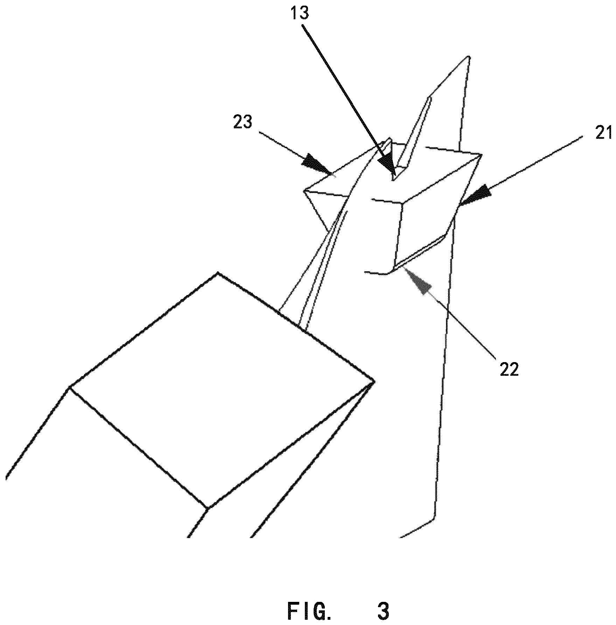

Figure 1A is a schematic diagram of the damaged area at the tip of the compressor blade. Figure 1B is a schematic diagram of the area to be repaired at the tip of the compressor blade. Figure 2 is a schematic diagram of the flexible fixing for the damage at the tip of the compressor blade according to the first embodiment of the invention. Figure 3 is a schematic diagram of the flexible fixing for the damage at the leading edge and trailing edge of the compressor blade according to the second embodiment of the invention.

As shown in Figure 1 to Figure 3, a method for repairing an ultra-thin structure by additive manufacturing comprises the following steps:
(a) removing a damaged area 11 of the ultra-thin structure by machining, and the damaged area 11 is machined into a regular shape according to the principle of minimum removal, preventing metallurgical defects caused by the irregular shape in the subsequent repairing process;
(b) obtaining a three-dimensional model of an area to be repaired 12 of the ultra-thin structure;
(c) performing three-dimensional model processing on the area to be repaired 12;
(d) building a powder carrying device 21 around a bottom of the area to be repaired 12, so that powder 23 (metallic powder or non-metallic powder) is filled into the powder carrying device 21 until it is on the same plane as or tangent to a bottom surface 13 (the bottom surface can be a flat surface or a curved surface) of the area to be repaired 12;
(e) melting, sintering or solidifying the powder 23 in the powder carrying device 21 around an outer contour of the ultra-thin structure by a high energy beam (such as a laser beam, electron beam, ion beam, etc.) or auxiliary heating (such as induction heating, etc.), and combining with the outer contour of the ultra-thin structure to form a thickened outer contour structure, which becomes a flexible fixture and plays a role in supporting subsequent repairing and preventing ablation of a part body;
(f) based on path planning obtained by the model processing, repairing the area to be repaired 12 by additive manufacturing technique (after repairing, the area to be repaired 12 becomes a repaired area).

According to the above technical solution, the method for repairing the ultra-thin structure by additive manufacturing has the following benefits: the ultra-thin structure can be repaired without a super mini spot high energy beam or a thickened fixture.

Specifically, the invention provides the method for repairing the ultra-thin structure by additive manufacturing, which has a simple and convenient repairing process, high operability and is suitable for the ultra-thin structure that is difficult to repair, the repairing can be achieved by a short procedure. Taking blade repairing as an example, it is estimated that the repairing time is reduced from the original 75hrs (fixture designing 20hrs+, fixture processing 30hrs+, fixture fixing 1hr+ and fixture removing 24hrs) to 12hrs, which can save the materials greatly and achieve rapid repairing at a low cost.
(1) The invention uses the powder flexible fixture design, and the design and manufacture of the profile modeling thickened fixture is not required, reducing the time cost. The metallurgical defects caused by the gap of fixture and the deformation caused by the fixture removing process can also be avoided, which can effectively improve the quality of repairing and improve the precision of the size after repairing the part with ultra-thin structure;
(2) The invention is a combination of flexible fixture design and additive manufacturing technique, without the need of modifying the equipment or purchasing new equipment, which can reduce the cost of the equipment greatly and expend the range of application of the equipment effectively;
(3) The repairing process of the invention is simple and convenient, with a high operability, and is suitable for the ultra-thin structure that is difficult to repair.

Preferably, the method for repairing the ultra-thin structure by additive manufacturing further comprises step (g): after step (f), performing heat treatment on the ultra-thin structure after repairing to remove stress or adjust the microstructure.

Preferably, the method for repairing the ultra-thin structure by additive manufacturing further comprises step (h): after step (g), performing polishing or machining on the repaired area, so that the dimension of the repaired area satisfies the final operating requirement.

Preferably, the laser parameters in step (e) are: laser power of 300-400W, scanning rate of 800-1000mm/min, spot diameter of 1mm. With the appropriate laser parameters, the powder around the bottom contour of the area to be repaired can be sintered preferably, thereby forming the flexible fixture and an effective support for the subsequent melting deposition repairing.

Preferably, the laser parameters in step (f) are: laser power of 300-500W, scanning rate of 400-500mm/min, spot diameter of 1mm, powder feeding rate of 10-12g/min. With the appropriate laser parameters, the area to be repaired can be repaired preferably.

Preferably, the same laser high energy beam equipment is used in step (e) and step (f), which combines the flexible fixture design and additive manufacturing technique, without the need of modifying the equipment or purchasing new equipment, so the cost of the equipment can be reduced greatly and the range of application of the equipment can be expended effectively. Alternatively, other high energy beam (electron beam, ion beam, etc.) equipment that is different from the one used in step (f) can also be used in step (e).

Preferably, the three-dimensional model in step (b) is obtained by building a model in a modelling software or three-dimensional scanning on an original part (the original part is the ultra-thin structure without damage), so that the three-dimensional model of the area to be repaired can be obtained preferably.

Preferably, step (c) comprises: allowance addition processing, layer separation and cutting processing and path planning processing, so that the three-dimensional model of the area to be repaired can be processed preferably for the convenience of subsequent repairing operations.

Preferably, as shown in Figure 2 and Figure 3, the flexible fixture in step (e) is constructed by metallic or non-metallic materials and fixed to the ultra-thin structure. The powder carrying device is constructed by an appropriate material at an appropriate position for the convenience of subsequent powder filling, forming the flexible fixture after sintering.

Preferably, the laser melting deposition technique with synchronous powder feeding, selective laser melting deposition technique with powder spreading or other high energy beam additive manufacturing technique is used for repairing in step (f). The area to be repaired is repaired by an appropriate additive manufacturing technique to ensure a better repairing effect.

Preferably, heat treatment parameters in step (g) are: heat treatment temperature of 550°C and heat treatment time of 4hrs. With appropriate heat treatment parameters, the stress in the ultra-thin structure after repairing can be removed preferably.

### The first embodiment: repairing of a compressor blade tip

(1) machining on the damaged blade tip: removing the entire blade tip (including the damaged area) by machining.
(2) building a three-dimensional model of an area to be repaired: building a three-dimensional model of an area to be repaired by modelling software such as UG, CAD, etc..
(3) model processing: performing allowance addition (0.5mm) processing, layer separation and cutting processing and path planning processing on the three-dimensional model of the area to be repaired.
(4) flexible fixing at the bottom of the area to be repaired: building a powder carrying device 21 flexibly on the two sides of the bottom of the area to be repaired with soft metallic materials such as aluminum foil, and fixing to the compressor blade by a high-temperature resistance tape 22, as shown in Figure 2.
(5) filling powder into the powder carrying device: filling Ti17 metallic powder 23 into the powder carrying device 21, and flattening the powder so that the powder is in the same plane as the bottom surface of the area to be repaired 13.
(6) manufacturing a flexible fixture: positioning on the bottom of the area to be repaired, set the parameters of the laser device based on the contour of the bottom of the area to be repaired, so that laser scans along the contour of the bottom of the area to be repaired for a round, sintering the metallic powder around the contour to form the flexible fixture, which can support the subsequent melting deposition repairing effectively. The specific parameters are: laser power of 300-400W, scanning rate of 800-1000mm/min, spot diameter of 1mm.
(7) additive manufacturing on an repaired area: after the flexible fixture is completed, based on the planning path obtained by the model processing, performing additive manufacturing on the repaired area using the laser melting deposition technique with synchronous powder feeding (that is, repairing the area to be repaired, and the area to be repaired becomes the repaired area after repairing). The specific parameters are: laser power of 300-500W, scanning rate of 400-500mm/min, spot diameter of 1mm, powder feeding rate of 10-12g/min.
(8) heat treatment: performing stress relief treatment on the ultra-thin metal structure after repairing with an appropriate heat treatment system. The heat treatment parameters are: heat treatment temperature of 550°C and heat treatment time of 4hrs.
(9) surface treatment: performing polishing or machining on the repaired area, so that the dimension of the repaired area satisfies the final operating requirement, the surface quality requirement of the repaired part is Ra=0.6.

**The second embodiment: repairing of leading edge and trailing edge of a compressor blade**
(1) machining on the damaged leading edge and trailing edge: removing the damaged area on the leading edge and trailing edge by machining according to the principle of minimum removal, forming a regular trapezoidal groove.
(2) building a three-dimensional model of an area to be repaired: building a three-dimensional model of an area to be repaired by modelling software such as UG, CAD, etc..
(3) model processing: performing allowance addition (0.5-1mm) processing, layer separation and cutting processing and path planning processing on the three-dimensional model of the area to be repaired.
(4) flexible fixing at the bottom of the area to be repaired: building a powder carrying device 21 flexibly on the two sides of the bottom of the area to be repaired with soft metallic materials such as aluminum foil, and fixing to the compressor blade by a high-temperature resistance tape 22, as shown in Figure 3.
(5) filling powder into the powder carrying device: filling TC4 metallic powder 23 into the powder carrying device 21, and flattening the powder so that the powder is in the same plane as the bottom surface of the area to be repaired 13.
(6) manufacturing a flexible fixture: positioning on the bottom of the area to be repaired, set the parameters of the laser device based on the contour of the bottom of the area to be repaired, so that laser scans along the contour of the bottom of the area to be repaired for a round, sintering the metallic powder around the contour to form the flexible fixture, which can support the subsequent melting deposition repairing effectively. The specific parameters are: laser power of 300-400W, scanning rate of 800-1000mm/min, spot diameter of 1mm.
(7) additive manufacturing on an repaired area: after the flexible fixture is completed, based on the planning path obtained by the model processing, performing additive manufacturing on the repaired area using the laser melting deposition technique with synchronous powder feeding (that is, repairing the area to be repaired, and the area to be repaired becomes the repaired area after repairing). The specific parameters are: laser power of 300-500W, scanning rate of 400-500mm/min, spot diameter of 1mm, powder feeding rate of 10-12g/min.
(8) heat treatment: performing vacuum stress relief treatment on the ultra-thin metal structure after repairing with an appropriate heat treatment system. The heat treatment parameters are: heat treatment temperature of 550°C and heat treatment time of 4hrs.
(9) surface treatment: performing polishing or machining on the repaired area, so that the dimension of the repaired area satisfies the final operating requirement, the surface quality requirement of the repaired part is Ra=0.6.

The specific embodiments of the present invention have been described above, but those skilled in the art should understand that the above specific embodiments do not limit the invention, and those skilled in the art can make various modifications on the basis of the above disclosure, without departing from the scope of the invention.

## Claims

1. A method for repairing an ultra-thin structure by additive manufacturing, the ultra-thin structure refers to the structure with a thickness of less than 1mm, wherein the method comprises the following steps:
(a) removing a damaged area of the ultra-thin structure by machining;
(b) obtaining a three-dimensional model of an area to be repaired of the ultra-thin structure;
(c) performing three-dimensional model processing on the area to be repaired;
(d) building a powder carrying device around a bottom of the area to be repaired, so that powder is filled into the powder carrying device until it is on the same plane as or tangent to a bottom surface of the area to be repaired;
(e) melting, sintering or solidifying the powder in the powder carrying device around an outer contour of the ultra-thin structure by a high energy beam or auxiliary heating, and combining with the outer contour of the ultra-thin structure to form a thickened outer contour structure, which becomes a flexible fixture and plays a role in supporting subsequent repairing and preventing ablation;
(f) based on path planning obtained by the model processing, repairing the area to be repaired by additive manufacturing technique.

2. The method for repairing the ultra-thin structure by additive manufacturing according to claim 1, wherein the method further comprises step (g):
after step (f), performing heat treatment on the ultra-thin structure after repairing to remove stress or adjust the microstructure.

3. The method for repairing the ultra-thin structure by additive manufacturing according to claim 2, wherein the method further comprises step (h):
after step (g), performing machining on the repaired area, so that the dimension of the repaired area satisfies final operating requirement.

4. The method for repairing the ultra-thin structure by additive manufacturing according to claim 1, wherein a high energy beam equipment is used in step (e), and the same or a different high energy beam equipment is used in step (f).

5. The method for repairing the ultra-thin structure by additive manufacturing according to claim 1, wherein the three-dimensional model in step (b) is obtained by building a model in a modelling software or three-dimensional scanning on an original part.

6. The method for repairing the ultra-thin structure by additive manufacturing according to claim 1, wherein step (c) comprises: allowance addition processing, layer separation and cutting processing and path planning processing.

7. The method for repairing the ultra-thin structure by additive manufacturing according to claim 1, wherein the flexible fixture in step (e) is constructed by metallic or non-metallic materials and fixed to the ultra-thin structure.

8. The method for repairing the ultra-thin structure by additive manufacturing according to claim 1, wherein laser melting deposition technique with synchronous powder feeding, selective laser melting deposition technique with powder spreading or other type of additive manufacturing technique is used for repairing in step (f).
